# EUROPÄISCHE PATENTANMELDUNG

(11) **EP 1 591 883 A2**
(43) Veröffentlichungstag der Anmeldung: **02.11.2005**
(21) Anmeldenummer: 05102489.1
(22) Anmeldetag: 30.03.2005
(51) Int. Cl.: G06F 3/14

(54) **Anordnung und Verfahren zur Ansteuerung mehrerer Grafikdisplays**

(30) Priorität: 27.04.2004 DE 102004020541
(71) Anmelder: SIEMENS AKTIENGESELLSCHAFT, 80333 München (DE)
(72) Erfinder: Stang, Udo, 93051 Regensburg (DE)

(57) **Zusammenfassung**

Die Erfindung betrifft eine Anordnung und ein Verfahren zur Ansteuerung von mindestens zwei, unterschiedliche Bildinhalte anzeigenden Grafikdisplays (1, 2) mit einer Bildsteuereinheit (3), welche ein horizontales Synchronisationssignal (H-Sync) zur Vorgabe eines Zeilentaktes und ein vertikales Synchronisationssignal (V-Sync) zur Vorgabe eines Bildtaktes ausgibt und die ein Pixeltaktsignal (Pclk) zur Vorgabe eines Bildpunkttaktes und ein Bildsignal (Video) zur Ansteuerung von Bildpunkten gleichzeitig an jedes der Grafikdisplays (1, 2) überträgt. Die Bildsteuereinheit (3) gibt dabei das horizontale Synchronisationssignal (H-Sync) als ein erstes Zeilensynchronisationssignal (H-Sync1) direkt an ein erstes (1) der mindestens zwei Grafikdisplays (1, 2) aus. Zwischen der Bildsteuereinheit (3) und mindestens einem zweiten (2) der mindestens zwei Grafikdisplays (1, 2) ist ein Zeilentaktgenerator (4) geschaltet, der mit Hilfe des Pixeltaktsignals (Pclk) ein zweites Zeilensynchronisationssignal (H-Sync2) erzeugt und an das zweite Grafikdisplay (2) ausgibt, wobei das zweite Zeilensynchronisationssignal (H-Sync2) gegenüber dem ersten Zeilensynchronisationssignal (H-Sync1) um eine vorgegebene Anzahl von Pixeltakten zeitlich verschoben ist.

## Beschreibung

Die Erfindung betrifft eine Anordnung und ein Verfahren zur Ansteuerung von mindestens zwei, unterschiedliche Bildinhalte anzeigenden Grafikdisplays, wobei eine Bildsteuereinheit vorhanden ist, die ein horizontales Synchronisationssignal zur Vorgabe eines Zeilentaktes und ein vertikales Synchronisationssignal zur Vorgabe eines Bildtaktes ausgibt und die ein Pixeltaktsignal zur Vorgabe eines Bildpunkttaktes und ein Bildsignal zur Ansteuerung von Bildpunkten gleichzeitig an jedes der Grafikdisplays überträgt.

Video- oder Grafikbilder werden heutzutage aus verschiedensten Signalquellen gewonnen und zur Anzeige auf Video- bzw. Computerbildschirmen gebracht. Die Bilder können beispielsweise in Form von per Kabel oder Satellit empfangenen TV-Signalen oder in Form von Ausgangssignalen von CCD-Kameras, Videorekordern oder DVD-Spielern vorliegen. Ebenso können Bilder direkt von einer Recheneinheit, wie einem Computer oder einem elektronischen Steuergerät, erzeugt und an eine Anzeigeeinheit übertragen werden. Die früher verwendeten Kathodenstrahlmonitore werden dabei mehr und mehr von den LCD-Displays abgelöst und anstelle analoger Signale werden immer häufiger digitale Signale übertragen. Im Folgenden werden die möglichen Anzeigeeinheiten unter dem Oberbegriff der Grafikdisplays zusammengefasst. Die sich weiter entwickelnden Displaytechnologien ändern dabei nur wenig am Prinzip der Bilderzeugung.

Nach wie vor wird ein Bild aus einzelnen, jeweils zu Zeilen zusammengefassten, Bildpunkten aufgebaut, welche auch Pixel genannt werden. Eine bestimmte Anzahl an Zeilen ergibt die eigentliche Bildgröße. Ein sichtbares Bild entsteht durch die aufeinander folgende Ansteuerung der Bildpunkte von links nach rechts und oben nach unten. Das Ansteuersignal, auch Bild- oder Videosignal genannt, gibt pro Bildpunkt die Intensität der drei Grundfarben Rot, Grün und Blau vor, welche übereinander gelegt die eigentliche Farbe und Helligkeit des Bildpunktes definieren. Bei heutigen Grafikdisplays wird zur Vorgabe des Wechsels der Ansteuerung von einem Bildpunkt zum nächsten ein so genanntes Pixeltaktsignal verwendet.
Ist man bei der Ansteuerung der einzelnen Bildpunkte am Ende einer Zeile angekommen, folgt ein Zeilenrücklauf zum Beginn der nächsten Zeile, welcher durch einen Impuls eines so genannten horizontalen Synchronisationssignals ausgelöst wird. Mit dem horizontalen Synchronisationssignal wird also der zeitliche Takt der Zeilenwechsel vorgegeben, d.h. es wird ein Zeilentakt erzeugt.

Ist das Ende der letzten Zeile erreicht, wird wiederum ein Rücklauf ausgelöst, der Bildrücklauf, welcher einen Wechsel auf den Anfang der ersten Zeile und damit zum nächsten Bild herbeiführt. Der Bildrücklauf wird durch einen Impuls in dem so genannten vertikalen Synchronisationssignal signalisiert, welches damit den Bildtakt bestimmt. Die Anzahl der vertikalen Synchronisationssignal-Impulse, d.h. der dargestellten Bilder, pro Sekunde definiert die Bildwiederholfrequenz.

Normalerweise ist es üblich, je Grafikdisplay eine Bildsteuereinheit zur Generierung der drei genannten Steuersignale - horizontales Synchronisationssignal, vertikales Synchronisationssignal und Pixeltaktsignal - sowie zur Bereitstellung des eigentlichen Bildsignals zu verwenden. Eine Bildsteuereinheit kann entweder ein separater Grafikcontroller sein, der die von einer externen Quelle stammenden Bilder einliest und in ein vom Grafikdisplay verarbeitbares Format umwandelt, oder es wird eine Recheneinheit mit integriertem Grafikcontroller verwendet, die die darzustellenden Bilder nicht nur selbst erzeugt sondern auch gleich umwandelt.

Die Verbreitung von Grafikdisplays nimmt heutzutage stetig zu, wobei in zunehmendem Maße einzelne Rechen- bzw. Bilderzeugungssysteme mit jeweils mehreren Anzeigen ausgestattet werden. So werden inzwischen in Kraftfahrzeugen integrierte Audio-Video-Navigationssysteme eingesetzt, die nicht mehr nur Bildschirme für Fahrer und Beifahrer vorsehen, sondern ebenso für den Fondbereich, und bei denen möglichst jeder Benutzer seinen eigenen Bildschirminhalt festlegen kann. Andere Anwendungen von Multi-Displaysystemen findet man beispielsweise im Home-Entertainment-Bereich oder bei Anlagen, die eine Überwachung bzw. Beobachtung gleicher Vorgänge durch mehrere Personen (Fertigungsstraßen, Registrierkassen, Dienstleistungsterminals) erfordern.

In jedem Fall stellt die Verwendung einer jeweils eigenen Bildsteuereinheit pro Grafikdisplay einen nicht zu vernachlässigenden Kostenfaktor dar, der unter Umständen durch zusätzlich erforderlichen Grafikspeicher noch vergrößert wird. Aus diesem Grund gibt es Bestrebungen, nur noch eine Bildsteuereinheit für mehrere Grafikdisplays zu verwenden. Zu diesem Zweck wurden spezielle Grafikprozessoren entwickelt, die zwei getrennte Ausgänge für je ein Grafikdisplay aufweisen oder die in der Lage sind, unterschiedliche Bild- und Bildsteuersignale zu multiplexen. Sofern gemultiplexte Signale ausgegeben werden, ist wiederum ein Zusatzbaustein erforderlich, der für das Demultiplexen sorgt.

Eine demgegenüber bereits weniger aufwändige Lösung ist aus der DE-10008498-A1 bekannt. Dort werden eine Anzeigeanordnung mit mindestens zwei Displaymodulen und einem gemeinsamen Videocontroller und ein Verfahren zum Betreiben der Anzeigeanordnung beschrieben, wobei mindestens eines der Displaymodule eine Zähleinrichtung zum Zählen der vom Videocontroller ausgesendeten Zeilensynchronisationssignale aufweist. Die Zähleinrichtung ist mit einem ebenfalls vom Videocontroller ausgesendeten Spaltensynchronisationssignal zurücksetzbar. Mit dem zugehörigen Verfahren können Displays mit unterschiedlicher Zahl sichtbarer Bildzeilen und gleicher Zahl an Bildpunkten je Zeile betrieben werden. Dabei werden erst alle Zeilen eines ersten Displays angesteuert und danach alle Zeilen eines zweiten Displays, d.h. das vom Videocontroller ausgegebene Bildsignal enthält zuerst alle Daten eines Bildes des ersten Displays gefolgt von allen Daten eines Bildes des zweiten Displays.

Aufgabe der vorliegenden Erfindung ist es, die bekannte Anordnung und das bekannte Verfahren zur Ansteuerung von mindestens zwei, unterschiedliche Bildinhalte anzeigenden Grafikdisplays dahingehend zu verbessern, dass auch Displays mit zueinander unterschiedlicher Zahl an sichtbaren Bildpunkten je Zeile von einer gemeinsamen Bildsteuereinheit angesteuert werden können.

Die Aufgabe wird mit einer Anordnung nach Anspruch 1 und einem Verfahren nach Anspruch 10 gelöst.

Erfindungsgemäß gibt die Bildsteuereinheit das horizontale Synchronisationssignal als ein erstes Zeilensynchronisationssignal direkt an ein erstes der mehreren Grafikdisplays aus und ein zwischen die Bildsteuereinheit und ein zweites der mehreren Grafikdisplays geschalteter Zeilentaktgenerator erzeugt mit Hilfe des von der Bildsteuereinheit ausgegebenen Pixeltaktsignals ein zweites Zeilensynchronisationssignal und gibt es an das zweite Grafikdisplay aus. Das zweite ist dabei gegenüber dem ersten Zeilensynchronisationssignal um eine vorgegebene Anzahl von Pixeltakten zeitlich verschoben.

Mit dieser Anordnung wird es möglich, mehrere Displays nicht mehr bildweise nacheinander, so als wären die Bildschirme untereinander angeordnet, sondern zeilenweise nacheinander anzusteuern, so als wären die Bildschirme nebeneinander angeordnet. Je nach vorgegebener zeitlicher Verschiebung des zweiten Zeilensynchronisationssignals gegenüber dem ersten Zeilensynchronisationssignal können die Zeileninhalte dabei einander überlappend oder auch vollständig unabhängig voneinander dargestellt werden.
Bei einer vollständig unabhängigen Darstellung entspricht die Anzahl der von der Bildsteuereinheit ausgegebenen Pixeltakte zur Ansteuerung der sichtbaren Bildpunkte der Summe aus den Zahlen an sichtbaren Bildpunkten je Zeile des ersten Displays und des zweiten Displays. Im Fall einer Überlappung werden insgesamt weniger sichtbare Bildpunkte angesteuert. In jedem Fall können sich die Zeilenbreiten der beiden Displays beliebig voneinander unterscheiden.

Nach dem Erreichen des letzten sichtbaren Bildpunktes auf der letzten Zeile des zuletzt anzusteuernden Grafikdisplays bzw. - sofern Displays mit unterschiedlicher Zeilenanzahl verwendet werden - des größten der Grafikdisplays, erfolgt ein Bildrücklauf. Dafür wird das vertikale Synchronisationssignal an alle Grafikdisplays gleichermaßen ausgegeben. Die erfindungsgemäße Anordnung erlaubt also die Ansteuerung von Displays, die sich sowohl in ihrer Zeilenbreite als auch in der Bildhöhe unterscheiden können.

Bei dem erfindungsgemäßen Verfahren wird das horizontale Synchronisationssignal als ein erstes Zeilensynchronisationssignal an ein erstes der mindestens zwei Grafikdisplays ausgegeben und es wird ein zweites Zeilensynchronisationssignal erzeugt, indem das horizontale Synchronisationssignal um eine feste Anzahl von Pixeltakten verschoben wird. Das zweite Zeilensynchronisationssignal wird mindestens an ein zweites der mehreren Grafikdisplays ausgegeben.

Mit der Erfindung kann nahezu jede beliebige Kombination aus unterschiedlichen Grafikdisplays mit nur einer Bildsteuereinheit angesteuert werden. Der technische Zusatzaufwand dafür ist gering, da zur Realisierung des Zeilentaktgenerators lediglich eine einfache Steuerlogik mit Zähler und einfachen AND-/OR-Gattern benötigt wird. Sofern bereits ein programmierbarer Logikbaustein (PLD oder FPGA) vorhanden ist, könnte die Steuerlogik dort implementiert werden und es wäre überhaupt keine zusätzliche Hardware erforderlich.

Bei der Auswahl der anzusteuernden Grafikdisplays muss lediglich darauf geachtet werden, dass die durch die Erfindung verlängerten Austastlücken durch die Displayspezifikation zugelassen sind. So muss in dem Fall, dass eine nicht überlappende Darstellung der Bildinhalte auf den mindestens zwei Grafikdisplays gewünscht wird, die maximale Zeilenlänge pro Display, also die Anzahl der maximal pro Zeile erlaubten Pixeltakte, mindestens gleich der Summe der sichtbaren Pixeltakte je Zeile aller Displays ist. Bei unterschiedlicher Anzahl an Bildzeilen ja Grafikdisplay müssen die Displayspezifikationen eine maximale Anzahl an Zeilen je Bild zulassen, die mindestens der Anzahl an anzusteuernden Zeilen (sichtbar plus unsichtbar) des größten der Displays entspricht.

In einer bevorzugten Ausgestaltung wird der Zeilentaktgenerator durch das von der Bildsteuereinheit ausgegebene horizontale Synchronisationssignal zurückgesetzt. Nach dem Zurücksetzen zählt er die von der Bildsteuereinheit ausgegebenen Pixeltakte und bei Erreichen der vorgegebenen Anzahl von Pixeltakten erzeugt der Zeilentaktgenerator einen Impuls im zweiten Zeilensynchronisationssignal. Mit diesem Impuls wird im zweiten Display die sichtbare Zeilenausgabe gestartet. Je nachdem, ob zu diesem Zeitpunkt bereits alle sichtbaren Bildpunkte des ersten Displays angesteuert wurden, wird nun derselbe Teil des Bildes wie auf dem ersten Display angezeigt oder das erste Display befindet sich bereits in einer nichtsichtbaren Phase der Ansteuerung, so dass auf dem zweiten Display ein unabhängiger Bildinhalt angezeigt wird. Sollen voneinander unabhängige Bilder auf den Grafikdisplays angezeigt werden, so muss also die zeitliche Verschiebung zwischen dem ersten und dem zweiten Zeilensynchronisationssignal mindestens der Zeit zur Ansteuerung der sichtbaren Bildpunkte des ersten Grafikdisplays entsprechen, wobei je Bildpunkt ein Pixeltakt benötigt wird.

Bevor die Ausgabe auf dem zweiten Display tatsächlich gestartet wird, muss zuerst ein Impuls des zweiten Zeilensynchronisationssignals am Eingang des Displays angelegen haben. Je nach gewünschter zeitlicher Lücke zwischen der Ausgabe einer Zeile auf dem ersten Display und der anschließenden Ausgabe auf dem zweiten, kann der Zeilentaktgenerator den Impuls im Anschluss an die Ansteuerung der sichtbaren Bildpunkte des ersten Displays verzögert erzeugen. Ist eine möglichst kleine bzw. gar keine Lücke gewünscht, so sollte der Impuls vor Abschluss der sichtbaren Bildausgabe auf dem ersten Display erzeugt werden. Demzufolge wäre die der Anzahl der sichtbaren Bildpunkte des ersten Displays entsprechende Anzahl an zu zählenden Pixeltakten um die Zahl an Pixeltakten zu reduzieren, die der Breite eines Impulses des zweiten Zeilensynchronisationssignals entspricht.

Bei bestimmten Displayausführungen muss als Steuersignal noch ein zusätzliches Enable-Signal zur Verfügung gestellt werden, um damit den exakten Beginn der Ansteuerung sichtbarer Bildpunkte festzulegen. Sofern ein solches Enable-Signal zur Ansteuerung des zweiten Displays benötigt wird, wird dieses ebenfalls vom Zeilentaktgenerator erzeugt. Entsprechend der Displayspezifikation muss es um eine bestimmte Anzahl an Pixeltakten gegenüber dem Zeilensynchronisationssignal verzögert gesetzt werden. Sofern weiterhin der Wunsch besteht, die Zeilenausgabe des zweiten Displays gleich im Anschluss an das erste Display zu starten, muss die vorgegebene Anzahl an zu zählenden Pixeltakten nicht nur um die Impulsbreite des zweiten Zeilensynchronisationssignals sondern weiterhin um die Anzahl der Pixeltakte, um die das Enable-Signal verzögert gesetzt werden soll, reduziert werden.

Für den Fall, dass auch das erste Display durch ein zusätzliches Enable-Signal angesteuert wird, muss die dafür erforderliche Verzögerungszeit zu den zu zählenen Pixeltakten hinzuaddiert werden.

In einer weiteren Ausgestaltung der Erfindung gibt die Bildsteuereinheit das vertikale Synchronisationssignal zur Initiierung eines Bildrücklaufs nicht an alle sondern nur an eines der mindestens zwei Grafikdisplays aus, und zwar als erstes Bildsynchronisationssignal. Zwischen die Bildsteuereinheit und ein anderes der mindestens zwei Grafikdisplays wird ein Bildtaktgenerator geschaltet, der mit Hilfe des von der Bildsteuereinheit generierten horizontalen Synchronisationssignals ein zweites Bildsynchronisationssignal erzeugt, wobei das zweite Bildsynchronisationssignal gegenüber dem ersten Bildsynchronisationssignal um eine vorgegebene Anzahl von Zeilentakten zeitlich verschoben ist. Mit dieser Anordnung können auch Displays betrieben werden, die eine unterschiedliche Spezifikation hinsichtlich des zeitlichen Ablaufs eines Bildrücklaufes aufweisen. So wird im allgemeinen für jedes Display genau festgelegt, wie viele nichtsichtbare Zeilen oder auch Leerzeilen mindestens auf einen Impuls des vertikalen Synchronisationssignals folgen müssen. Ist diese Zahl unterschiedlich, so können mit Hilfe des Bildtaktgenerators die Displays wieder miteinander synchronisiert werden, so dass dieselbe Bildwiederholfrequenz entsteht.

Die Synchronisation erfolgt in einer speziellen Ausgestaltung dadurch, dass der Bildtaktgenerator durch das von der Bildsteuereinheit generierte vertikale Synchronisationssignal zurückgesetzt wird. Nach dem Zurücksetzen beginnt der Bildtaktgenerator, die mittels des horizontalen Synchronisationssignals vorgegebenen Zeilentakte zu zählen. Erreicht der Bildtaktgenerator die vorgegebene Anzahl an Zeilentakten, so gibt er auf dem zweiten Bildsynchronisationssignal einen Impuls aus. Durch die Verschiebung des zweiten Bildsynchronisationsimpulses wird das damit angesteuerte Display sozusagen in einen Haltezustand versetzt, und der Beginn des nächsten Bildes wird für beide Displays anschließend zeitgleich gestartet. Das Display, das mit dem zweiten Bildsynchronisationssignal angesteuert wird, benötigt also weniger Leerzeilen nach Ende des Bildsynchronisationsimpulses als das mit dem ersten Bildsynchronisationssignal angesteuerte Display.

Die Erfindung wird nachfolgend anhand der Ausführungsbeispiele und der Zeichnung näher erläutert. Es zeigen:
- Fig. 1: Anordnung zur Ansteuerung von zwei Grafikdisplays mit unterschiedlichen Bildinhalten und unterschiedlicher Auflösung;
- Fig. 2: Timing-Diagramm der Ansteuerung der beiden Grafikdisplays aus Fig. 1;
- Fig. 3: Anordnung zur Ansteuerung von zwei Grafikdisplays mit unterschiedlichen Bildinhalten und unterschiedlicher Auflösung und unterschiedlicher V_Sync-Austastlücke;
- Fig. 4: Timing-Diagramm der Ansteuerung der beiden Grafikdisplays aus Fig. 3.

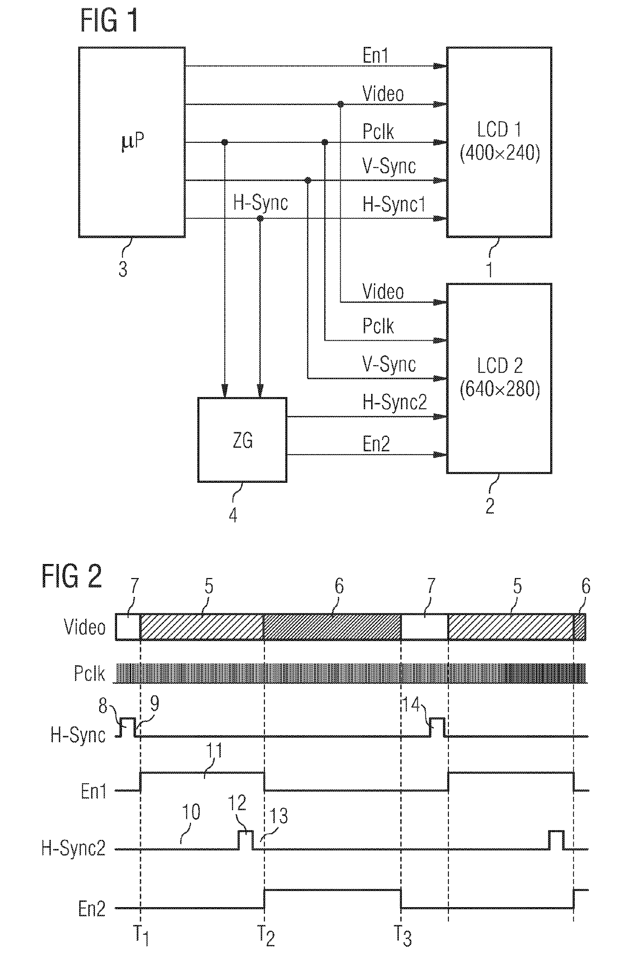

In Figur 1 ist eine Anordnung mit zwei LCD-Displays als Grafikdisplays 1 und 2 und mit einer Bildsteuereinheit 3 zur Ansteuerung der beiden Grafikdisplays 1 und 2 dargestellt. Als Bildsteuereinheit 3 wird ein Mikroprozessor mit integriertem Grafikcontroller verwendet. Die Bildsteuereinheit 3 erzeugt das eigentliche Bildsignal Video, welches an beide Grafikdisplays 1 und 2 ausgegeben wird, sowie die Steuersignale horizontales Synchronisationssignal H-Sync, vertikales Synchronisationssignal V-Sync, Pixeltaktsignal Pclk und Enable-Signal En1 für das Grafikdisplay 1. Das vertikale Synchronisationssignal V-Sync und das Pixeltaktsignal Pclk bilden ebenso wie das Video-Signal direkte Eingangssignale für beide Grafikdisplays 1 und 2.

Das horizontale Synchronisationssignal H-Sync wird als ein erstes Zeilensynchronisationssignal H-Sync1 an das Grafikdisplay 1 übertragen und stellt außerdem ein Eingangssignal für einen Zeilentaktgenerator 4 dar, wobei der Zeilentaktgenerator 4 zwischen die Bildsteuereinheit 3 und das Grafikdisplay 2 geschaltet ist. Neben dem horizontalen Synchronisationssignal H-Sync wird der Zeilentaktgenerator 4 noch mit dem Pixeltaktsignal Pclk versorgt. Als Ausgangssignale erzeugt der Zeilentaktgenerator 4 ein zweites Zeilensynchronisationssignal H-Sync2 sowie ein Enable-Signal En2. Beide Signale werden an das Grafikdisplay 2 ausgegeben.

In Figur 2 ist das Timing-Diagramm der verschiedenen Signale aus Figur 1 zu sehen. Das schematisch dargestellte Video-Signal deutet durch die unterschiedlichen Farben die unterschiedlichen Bildinhalte je einer Zeile der Grafikdisplays 1 bzw. 2 an. Der hellgraue Bereich 5 entspricht dabei dem sichtbaren Bereich einer Zeile des Grafikdisplays 1 und der dunkelgraue Bereich 6 dem sichtbaren Bereich einer Zeile des Grafikdislays 2. Die weißen Streifen 7 verdeutlichen die Austastlücken, d.h. den Zeitraum, in dem beide Displays 1 und 2 dunkel geschaltet sind und wo bei beiden Displays ein Zeilenrücklauf erfolgt.

Der zu dem H-Sync-Signal gehörende Impuls 8 setzt einen Zähler in dem Zeilentaktgenerator 4 zurück. Danach beginnt der Zeilentaktgenerator 4 die Takte des Pixeltaktsignals Pclk zu zählen. Zuerst vergehen einige Takte 9 bis zum Zeitpunkt T1, zu dem das Enable-Signal des Displays 1 auf High geschaltet wird und die Ausgabe sichtbarer Bildpunkte auf dem Display 1 beginnt. Danach zählt der Zeilentaktgenerator 4 noch eine weitere Anzahl 10 an Pixeltakten, wobei sich diese Anzahl 10 zusammensetzt aus der Gesamtzahl 11 an Pixeltakten zur Ansteuerung einer sichtbaren Bildzeile des Grafikdisplays 1, reduziert um die Anzahl 12 an Takten für die Dauer eines Impulses des zweiten Zeilensynchronisationssignals H-Sync 2 und um die Anzahl 13 an Takten für die Verzögerung des Enable-Signals En2 auf den Impuls des H-Sync2-Signals. Die Zahl 11 an Pixeltakten zur Ansteuerung einer sichtbaren Bildzeile des Grafikdisplays 1 entspricht der Dauer, für die das Enable-Signal En1 auf High gesetzt ist. Hat der Zeilentaktgenerator insgesamt die Summe der Taktanzahlen 9 und 10 gezählt, so setzt er das zweite Zeilensynchronisationssignal H-Sync2 auf High und nach einer weiteren Takteanzahl 13 auch das Enable-Signal 2. Damit wird zum Zeitpunkt T2 die Ausgabe sichtbarer Bildpunkte auf dem Grafikdisplay 2 gestartet. Da in diesem Ausführungsbeispiel bis zum Ende der Anzeige einer Bildzeile auf dem Grafikdisplay 1 gewartet wird, bevor die Anzeige auf dem Display 2 gestartet wird, werden vollständig unabhängige Bilder auf den Grafikdisplays ausgegeben.

Nach dem Ende der sichtbaren Bildzeile auf dem Grafikdisplay 2 zum Zeitpunkt T3 folgt eine Austastlücke 7, während der die Grafikdisplays 1 und 2 beide dunkel geschaltet sind. Der Impuls 14 im Signal H-Sync leitet dann wieder eine erneute Abfolge der Bildzeilenansteuerung ein.

In dem in Figur 1 dargestellten Beispiel wird ein Grafikdisplay 1 mit einer Auflösung von 400x240 und ein Grafikdisplay 2 mit 640x280 verwendet. Die Bildsteuereinheit 3 muss demzufolge auf die Ansteuerung eines Bildschirms mit der Auflösung 1040x280 konfiguriert werden. Während der Bildaufbau auf dem Grafikdisplay 1 bereits nach 240 sichtbaren Zeilen abgeschlossen ist und das Grafikdisplay 1 anschließend dunkel geschaltet ist (En1 ist Low), werden noch weitere 40 Zeilen auf dem zweiten Grafikdisplay 2 angesteuert. Erst danach kann mit der Anzeige des neuen Bildes auf dem Grafikdisplay 1 fortgefahren werden. Dies erfordert natürlich, dass die Spezifikation des Grafikdisplays 1 eine maximale Anzahl von mindestens 280 Zeilen je Bild zulässt. Ebenso müssen beide Grafikdisplays 1 und 2 mit einer maximalen Anzahl von Pixeln je Zeile von mindestens 1040 spezifiziert sein.

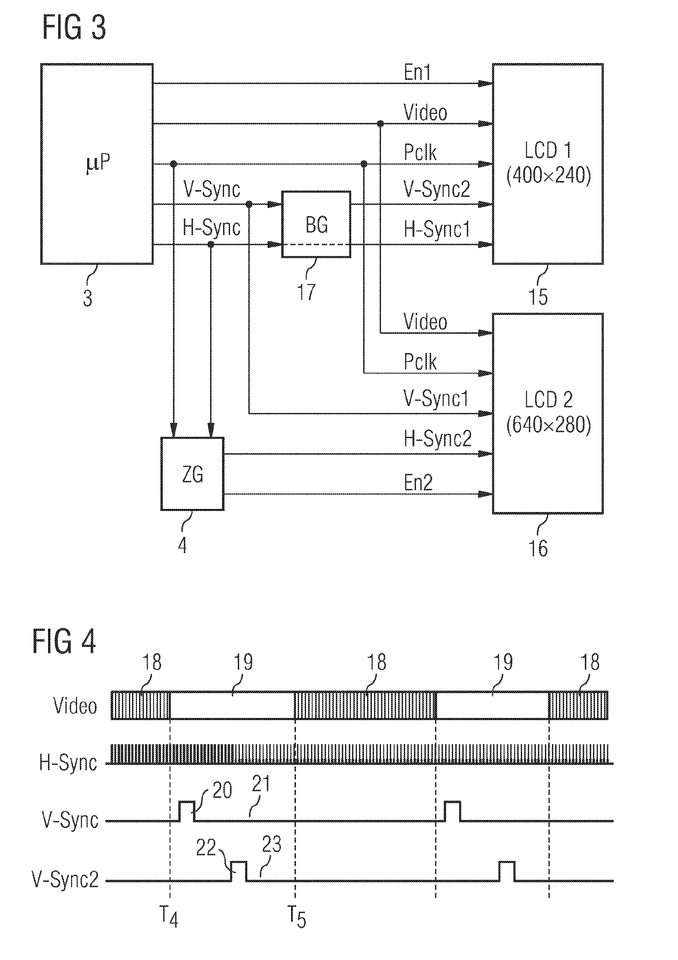

In Figur 3 ist eine gegenüber Figur 1 erweiterte Anordnung dargestellt, bei der die Grafikdisplays 14 und 15 voneinander abweichende Spezifikationen zur Länge der Bildrücklauf-Austastlücke aufweisen. Aus diesem Grund ist zusätzlich zwischen der Bildsteuereinheit 3 und dem Grafikdisplay 15 ein Bildtaktgenerator 17 geschaltet, dessen Eingangssignale das horizontale Synchronisationssignal H-Sync und das vertikale Synchronisationssignal V-Sync sind, wobei das Signal H-Sync unverändert als erstes horizontales Zeilensynchronisationssignal H-Sync1 an das Grafikdisplay 15 auch wieder ausgegeben wird. Das Signal H-Sync wird vom Bildtaktgenerator 17 zum Zählen der Bildzeilen benötigt.

Das Signal V-Sync wird von der Bildsteuereinheit 3 als ein erstes Bildsynchronisationssignal V-Sync1 direkt an das Grafikdisplay 16 ausgegeben, während das zweite Bildsynchronisationssignal V-Sync2 für das Grafikdisplay 15 vom Bildtaktgenerator 17 erzeugt wird. Die entsprechenden zeitlichen Signal-Verläufe sind dem Timing-Diagramm aus Figur 4 zu entnehmen.

Jeweils ein grau schraffierter Bereich 18 im Video-Signal symbolisiert ein auf beiden Grafikdisplays 15 und 16 sichtbar angesteuertes Bild, d.h. ein Zeitraum 18 entspricht der sichtbaren Ansteuerung aller Bildzeilen der beiden Displays. Da das Grafikdisplay 16 insgesamt 40 sichtbare Zeilen mehr aufweist als das Grafikdisplay 15, wird dort die Ansteuerung eines Bildes auch als letztes beendet sein. Nach dem zum Zeitpunkt T4 die letzte sichtbare Bildzeile auf dem Grafikdisplay 16 angesteuert wurde, erfolgt in der daran anschließenden Austastlücke 19 ein Bildrücklauf. Dieser wird für das Grafikdisplay 16 ausgelöst durch den Impuls 20 auf dem V-Sync-Signal. Zwischen dem Ende eines solchen Bildrücklaufimpulses und der ersten erlaubten Ansteuerung des neuen Bildes (Zeitpunkt T5) muss laut Spezifikation beim Grafikdisplay 16 ein Zeitraum von 20 Bildzeilen liegen. Bei dem Grafikdisplay 15 beträgt dieser Zeitraum nur 12 Bildzeilen. Damit der Bildrücklauf bei beiden Displays gleichzeitig erfolgt, wird der Bildtaktgenerator 17 durch den Impuls 20 zurückgesetzt. Ein Zähler im Bildtaktgenerator 17 beginnt anschließend, die Anzahl der Bildzeilen entsprechend dem Signal H-Sync zu zählen. Erreicht die Anzahl der Bildzeilen den Wert der Differenz zwischen den Zeilenzahlen 20 und 12, also den Wert 8, so setzt der Bildtaktgenerator 17 den Bildrücklauf-Impuls 22 des an das Grafikdisplay 15 auszugebenden Signals V-Sync2 auf High. Aus den zu unterschiedlichen Zeitpunkten beendeten Bildrücklauf-Impulsen 20 und 22 resultieren für die Grafikdisplays unterschiedliche Zeiträume 21 und 23 bis zur Ansteuerung des neuen Bildes (Zeitpunkt T5). Der Zeitraum 21 entspricht den geforderten 20 nichtsichtbaren Bildzeilen des Grafikdisplays 16 und der Zeitraum 23 den geforderten 12 nichtsichtbaren Bildzeilen des Grafikdisplays 15.

## Patentansprüche

1. Anordnung zur Ansteuerung von mindestens zwei, unterschiedliche Bildinhalte anzeigenden Grafikdisplays (1, 2, 15, 16) mit einer Bildsteuereinheit (3), welche ein horizontales Synchronisationssignal (H-Sync) zur Vorgabe eines Zeilentaktes und ein vertikales Synchronisationssignal (V-Sync) zur Vorgabe eines Bildtaktes ausgibt und die ein Pixeltaktsignal (Pclk) zur Vorgabe eines Bildpunkttaktes und ein Bildsignal (Video) zur Ansteuerung von Bildpunkten gleichzeitig an jedes der Grafikdisplays (1, 2, 15, 16) überträgt, **dadurch gekennzeichnet, dass** die Bildsteuereinheit (3) das horizontale Synchronisationssignal (H-Sync) als ein erstes Zeilensynchronisationssignal (H-Sync1) direkt an ein erstes (1, 15) der mindestens zwei Grafikdisplays (1, 2, 15, 16) überträgt und dass zwischen der Bildsteuereinheit (3) und mindestens einem zweiten (2, 16) der mindestens zwei Grafikdisplays (1, 2, 15, 16) ein Zeilentaktgenerator (4) geschaltet ist, der mit Hilfe des Pixeltaktsignals (Pclk) ein zweites Zeilensynchronisationssignal (H-Sync2) erzeugt und an das zweite Grafikdisplay (2, 16) ausgibt, wobei das zweite Zeilensynchronisationssignal (H-Sync2) gegenüber dem ersten Zeilensynchronisationssignal (H-Sync1) um eine vorgegebene Anzahl von Pixeltakten zeitlich verschoben ist.

2. Anordnung nach Anspruch 1, **dadurch gekennzeichnet, dass** der Zeilentaktgenerator (4) durch das horizontale Synchronisationssignal (H-Sync) zurückgesetzt wird und anschließend die von der Bildsteuereinheit (3) ausgegebenen Pixeltakte zählt und dass er bei Erreichen der vorgegebenen Anzahl von Pixeltakten einen Impuls (12) im zweiten Zeilensynchronisationssignal (H-Sync2) erzeugt.

3. Anordnung nach einem der vorhergehenden Ansprüche, **dadurch gekennzeichnet, dass** die vorgegebene Anzahl von Pixeltakten gebildet wird durch die Anzahl an Pixeltakten (11), die der Ansteuerung der sichtbaren Bildpunkte des ersten Grafikdisplays (1, 15) dienen.

4. Anordnung nach Anspruch 3, **dadurch gekennzeichnet, dass** die vorgegebene Anzahl von Pixeltakten verringert wird um die Anzahl an Pixeltakten, die die Breite des Impulses (12) des zweiten Zeilensynchronisationssignals (H-Sync2) bilden.

5. Anordnung nach Anspruch 4, **dadurch gekennzeichnet, dass** die vorgegebene Anzahl von Pixeltakten weiter reduziert wird um die Anzahl an Pixeltakten (13), die ein vom Zeilentaktgenerator (4) erzeugtes und an das zweite Grafikdisplay (2, 16) gesendetes Enable-Signal (En2) gegenüber dem zweiten Zeilensynchronisationssignal (H-Sync2) verzögert ist.

6. Anordnung nach Anspruch 4, **dadurch gekennzeichnet, dass** die vorgegebene Anzahl von Pixeltakten erhöht wird um die Anzahl an Pixeltakten (9), die ein von der Bilderzeugungseinheit (3) erzeugtes und an das erste Grafikdisplay (1, 15) gesendetes Enable-Signal (En1) gegenüber dem ersten Zeilensynchronisationssignal (H-Sync1) verzögert ist.

7. Anordnung nach einem der vorhergehenden Ansprüche, **dadurch gekennzeichnet, dass** die Bildsteuereinheit (3) das vertikale Synchronisationssignal (V-Sync) als ein erstes Bildsynchronisationssignal (V-Sync1) an eines (16) der mindestens zwei Grafikdisplays (15, 16) ausgibt und dass zwischen der Bildsteuereinheit (3) und einem anderen (15) der mindestens zwei Grafikdisplays (15, 16) ein Bildtaktgenerator (17) geschaltet ist, der mit Hilfe des horizontalen Synchronisationssignals (H-Sync) ein zweites Bildsynchronisationssignal (V-Sync2) erzeugt und an das andere Grafikdisplay (15) ausgibt, wobei das zweite Bildsynchronisationssignal (V-Sync2) gegenüber dem ersten Bildsynchronisationssignal (V-Sync1) um eine vorgegebene Anzahl von Zeilentakten zeitlich verschoben ist.

8. Anordnung nach Anspruch 7, **dadurch gekennzeichnet, dass** der Bildtaktgenerator (17) durch das vertikale Synchronisationssignal (V-Sync) zurückgesetzt wird und anschließend die von der Bildsteuereinheit (3) ausgegebenen Zeilentakte zählt und dass er bei Erreichen der vorgegebenen Anzahl von Zeilentakten einen Impuls (22) im zweiten Zeilensynchronisationssignal (V-Sync2) erzeugt.

9. Anordnung nach Anspruch 8, **dadurch gekennzeichnet, dass** die vorgegebene Anzahl von Zeilentakten einer Differenz entspricht, die gebildet wird aus einer Anzahl von Zeilentakten (21) des einen Grafikdisplays (16), welche zwischen dem Ende eines Impulses (20) im ersten Bildsynchronisationssignal (V-Sync1) und dem Beginn der Ansteuerung eines neuen Bildes (T5) liegen, und der Summe aus der Anzahl an Zeilentakten (23) des anderen Grafikdisplays (15), welche zwischen dem Ende des Impulses (22) im zweiten Bildsynchronisationssignal (V-Sync2) und dem Beginn der Ansteuerung eines neuen Bildes (T5) liegen, und der Anzahl an Zeilentakten, die die Breite des Impulses (22) des zweiten Bildsynchronisationssignals (V-Sync2) bilden.

10. Verfahren zur gleichzeitigen Ansteuerung von mindestens zwei Grafikdisplays (1, 2, 15, 16) mit nur einem horizontalen Synchronisationssignal (H-Sync) zur Vorgabe eines Zeilentaktes, einem vertikalen Synchronisationssignal (V-Sync) zur Vorgabe eines Bildtaktes und einem Pixeltaktsignal (Pclk), mit den Schritten:
- Ausgeben des horizontalen Synchronisationssignals (H-Sync) als ein erstes Zeilensynchronisationssignal (H-Sync1) an ein erstes der mindestens zwei Grafikdisplays (1, 15),
- Erzeugen eines zweiten Zeilensynchronisationssignals (H-Sync2) durch zeitliche Verschiebung des horizontalen Synchronisationssignals (H-Sync) um eine feste Anzahl von Pixeltakten des Pixeltaktsignals (Pclk) und Ausgeben des zweiten Zeilensynchronisationssignals (H-Sync2) an ein zweites der mindestens zwei Grafikdisplays (2, 16).

11. Verfahren nach Anspruch 10, **dadurch gekennzeichnet, dass** das vertikale Synchronisationssignal (V-Sync) als ein erstes Bildsynchronisationssignal (V-Sync1) an eines der mindestens zwei Grafikdisplays (16) ausgegeben wird und dass mit Hilfe des horizontalen Synchronisationssignals (H-Sync) ein zweites Bildsynchronisationssignal (V-Sync2) erzeugt und an ein anderes (15) der mindestens zwei Grafikdisplays (15, 16) ausgegeben wird, wobei das zweite Bildsynchronisationssignal (V-Sync2) gegenüber dem ersten Bildsynchronisationssignal (V-Sync1) um eine vorgegebene Anzahl von Zeilentakten zeitlich verschoben wird.
